# EUROPÄISCHE PATENTSCHRIFT

(11) **EP 2 635 825 B1**
(45) Veröffentlichungstag und Bekanntmachung des Hinweises auf die Patenterteilung: **17.02.2021**
(21) Anmeldenummer: 11779571.6
(22) Anmeldetag: 08.09.2011
(51) Int. Cl.: F16G 1/08, F16G 1/16, F16G 1/28, F16G 5/20

(54) **ANTRIEBSRIEMEN ZUR ÜBERTRAGUNG EINER ANTRIEBSBEWEGUNG UND VERFAHREN ZUR HERSTELLUNG EINES ANTRIEBSRIEMENS**
DRIVE BELT FOR TRANSMITTING A DRIVE MOVEMENT, AND METHOD FOR PRODUCING A DRIVE BELT
COURROIE DE TRANSMISSION DESTINÉE À TRANSMETTRE UN MOUVEMENT D'ENTRAÎNEMENT ET PROCÉDÉ DE FABRICATION D'UNE COURROIE DE TRANSMISSION

(30) Priorität: 03.11.2010 DE 102010043322
(43) Veröffentlichungstag der Anmeldung: 11.09.2013
(73) Patentinhaber: Arntz Beteiligungs GmbH & Co. KG, 37671 Höxter (DE)
(72) Erfinder: GIBSON, Daniel, Pattie, 37671 Höxter (DE)
(74) Vertreter: Ostermann, Thomas
(86) Internationale Anmeldenummer: PCT/DE2011/001697
(87) Internationale Veröffentlichungsnummer: WO 2012/059076

(56) Entgegenhaltungen:
- EP-A1- 1 762 654
- EP-A1- 2 133 462
- WO-A1-2010/066505
- WO-A2-02/055920
- DE-A1- 19 855 294
- US-A- 3 349 634

## Beschreibung

Die Erfindung betrifft einen Antriebsriemen nach dem Oberbegriff des Patentanspruchs 1.

Aus der EP 0 841 500 B1 ist ein Antriebsriemen zur Übertragung einer Antriebsbewegung mit einem Riemenkörper aus Polyurethan als einen aushärtbaren elastischen Werkstoff bekannt. In dem Riemenkörper ist in einer Längsrichtung des Antriebsriemens ein Carboncord als Zugbewehrung vergossen. Der Carboncord wird aus einer Vielzahl von miteinander verdrillten Kohlenfasern gebildet. Der Carboncord weist - bedingt durch die Geometrie der Kohlenfasern und das Fertigungsverfahren - Zwischenräume zwischen den Kohlenfasern auf. Zur Ausbildung des Riemenkörpers wird der die Zwischenräume aufweisende Carboncord mit dem Polyurethan umgossen. Ein Teil des Polyurethans dringt beim Gießen in die Zwischenräume des Carboncords ein. Je mm3 Cordvolumen sind nach dem Umgießen des Carboncords 0,20 mg, 0,24 mg oder 0,28 mg Polyurethan vorgesehen, wobei ein Mehr an Polyurethan als vorteilhaft angesehen werden. Nachteilig hierbei ist, dass das in den Zwischenräumen der Kohlenfasern eingelagerte Polyurethan im ausgehärteten Zustand zu einer unerwünschten Verhärtung des Antriebsriemens führt. Durch den Eintrag des Polyurethans in den Carboncord sinkt die Elastizität des Antriebsriemens und steigt dessen Biegemodul mit der Folge, dass der Carboncord beim Umbiegen desselben im Bereich von Riemenscheiben unzulässig hohen Belastungen ausgesetzt ist, die zur Beschädigung (insbesondere zum Bruch) der Kohlenfasern führen können und damit einen Ausfall des Antriebsriemens begünstigen und die dessen Lebensdauer reduzieren.

Aus der WO 02/055920 A2 ist ein Antriebsriemen mit einem Riemenkörper aus einem elastischen Werkstoff sowie eine Zugbewehrung bekannt. Die Zugbewehrung wird durch einen Carboncord gebildet, der aus einer Vielzahl von miteinander verdrillten Kohlefasern besteht. Die einzelnen Kohlefasern sind mit einer Cordbehandlungszusammensetzung bestehend aus einem Elastomerlatex sowie einem Resorcin-Formaldehyd-Reaktionsprodukt (RFL) als Füllstoff versehen.

Aus der EP 2 133 462 A1 ist ein Antriebsriemen mit einem Riemenkörper sowie einem Carboncord bekannt, wobei Kohlefasern des Carboncordes, von einer Beschichtung auf Basis eines RFL-Klebers umgeben sind.

Aus der EP 1 762 653 A1 ein Antriebsriemen mit einem Riemenkörper aus einem elastischen Werkstoff sowie einem Cord mit mehreren zueinander verdrillten Glasfasersträngen bekannt. Diese Glasfaserstränge sind jeweils von einem Beschichtungsmaterial umgeben, das bspw. durch einen RFL-Kleber gebildet sein kann. Zusätzlich kann eine zweite Beschichtungsschicht vorgesehen sein, mittels derer alle Stränge umfangsseitig umgeben sind.

Aufgabe der vorliegenden Erfindung ist es daher, einen Antriebsriemen und ein Verfahren zur Herstellung eines Antriebsriemens derart weiterzubilden, dass die Flexibilität des Antriebsriemens nach dem Vergießen des Carboncords verbessert und die Lebensdauer des Antriebsriemens erhöht werden.

Zur Lösung der Aufgabe weist die Erfindung die Merkmale des Patentanspruchs 1 auf.

Der besondere Vorteil der Erfindung besteht darin, dass zum einen durch das Verfüllen der Zwischenräume des Carboncords mit einem Füllstoff die Menge des den Riemenkörper bildenden elastischen Werkstoffs reduziert wird, der beim Gießen des Riemenkörpers in die Zwischenräume des Carboncords eindringen kann. Zum anderen ist der Füllstoff als ein Bruchverminderungsfüllstoff ausgebildet, der sich dadurch auszeichnet, dass er - auch nach dem Aushärten des den Riementräger bildenden elastischen Werkstoffs - biegefähig bleibt. Der Bruchverminderungsfüllstoff weist hierzu günstige Eigenschaften hinsichtlich Spannungsverhalten, Haftung und Biegefestigkeit sowie eine geringe Sprödheit auf. Im Zusammenwirken beider Maßnahmen wird einer Verfestigung und/oder Versprödung des Carboncords entgegengewirkt. Die Elastizität des Carboncords bleibt weitgehend erhalten mit der Folge, dass die während des Betriebs auf den Antriebsriemen wirkende Biegebelastung reduziert und die Kohlenfasern vor Beschädigung geschützt werden. Zugleich wird durch die Einbringung einer - wenn auch geringen - Menge des elastischen Werkstoffs des Riemenkörpers in die Zwischenräume des Carboncords die Haftung zwischen dem Carboncord und dem Riemenkörper gewährleistet. Aufgrund der unterschiedlichen Materialien, die als Bruchverminderungsfüllstoff einerseits und als elastischer Werkstoff für den Riemenkörper andererseits dienen, können der Carboncord und der Riemenkörper auf ihre jeweilige Aufgabe hin optimiert werden.

Nach einer bevorzugten Ausführungsform der Erfindung weist der Bruchverminderungsfüllstoff Epoxalharz und/oder Isocyanat auf. Hierbei können die Materialien einzeln, in beliebiger Kombination miteinander oder in Kombination mit anderen Werkstoffen als Bruchverminderungsfüllstoff dienen. Vorteilhaft weist der Bruchverminderungsfüllstoff ein hohes Dämpfungsvermögen und eine gute Elastizität auf. Zudem kann der Bruchverminderungsfüllstoff als ein die Verbindung des Carboncords mit dem Riemenkörper sicherndes Haftmittel dienen. Hierdurch ist sichergestellt, dass der Carboncord fest mit dem Riemenkörper verbunden ist und die Elastizität des Antriebsriemens erhalten bleibt.

Nach einer Weiterbildung der Erfindung weist der Carboncord zu Garnen verdrillte Kohlenfasern und/oder zu Garnbündeln verdrillte Garne aus Kohlenfasern auf. Der Bruchverminderungsfüllstoff füllt die Zwischenräume zwischen den zu Garnen bzw. zu Garnbündeln verdrillten Kohlenfasern nahezu vollständig aus. Vorteilhaft wird die Möglichkeit geschaffen, die Zugfestigkeit des Antriebsriemens auf die jeweilige Antriebsaufgabe anzupassen, indem die Anzahl der Kohlenfasern je Garn variiert bzw. ein aus mehreren Garnen gebildeter Carboncord vorgesehen ist. Typischerweise weist der Carboncord einige hundert bis zu mehreren tausend Kohlenfasern auf. Ein Garnbündel besteht aus wenigstens zwei, typischerweise aus drei oder mehr Garnen, die ihrerseits schraubenlinienförmig miteinander verdrillt sind.

Im Sinne der Erfindung sind die Zwischenräume nahezu vollständig mit dem Bruchverminderungsfüllstoff gefüllt, wenn der zweite Teil der Zwischenräume im Verhältnis zum ersten Teil der Zwischenräume insgesamt 0,3 oder weniger, vorzugsweise 0,2 oder weniger, besonders bevorzugt 0,15 oder weniger beträgt.

Nach einer Weiterbildung der Erfindung weisen die Kohlenfasern eine diese zumindest abschnittsweise umgebende Beschichtung auf. Vorteilhaft kann diese Beschichtung die Widerstandsfähigkeit der Kohlenfasern erhöhen. Ebenso kann die Beschichtung durch einen Haftvermittler erfolgen, der die

Haftung zwischen Kohlenfasern, Bruchverminderungsfüllstoff und elastischem Werkstoff des Riemenkörpers verbessert und zur Stabilität des Antriebsriemens beiträgt.

Nach einer Weiterbildung der Erfindung ist auf einer verschleißanfälligen Arbeitsseite des Riemenkörpers eine Beschichtung vorgesehen. Durch das Vorsehen der Beschichtung können vorteilhaft der Verschleiß des Antriebsriemens reduziert und die Lebensdauer des Riemens erhöht werden. Zudem kann durch die Beschichtung die Reibung zwischen dem Antriebsriemen und einer mit dem Antriebsriemen in Eingriff stehenden Riemenscheibe reduziert werden.

Nach einer Weiterbildung der Erfindung weist die Beschichtung eine an dem Riemenkörper anliegende verschleißreduzierende Gewebeschicht und/oder eine reibungsreduzierende Polyethylenschicht auf. Die Polyethylenschicht ist hierbei auf einer dem Riemenkörper abgewandten Seite der Gewebeschicht angeordnet. Vorteilhaft verbessert das Vorsehen der Gewebeschicht die Verschleißeigenschaften des Antriebsriemens und erhöht dessen Lebensdauer. Die Polyethylenschicht verhindert, dass der elastische Werkstoff des Riemenkörpers durch Freiräume des Gewebes hindurch dringt und in direkten Eingriff mit der Riemenscheibe gelangt. Der elastische Werkstoff des Riemenkörpers weist typischerweise im Zusammenwirken mit üblichen Riemenscheibenmaterialien einen unerwünscht hohen Reibungskoeffizienten von 0,6 oder mehr auf. Der aufgrund der hohen Reibung verursachte Verschleiß wird vermieden, wenn der direkte Kontakt zwischen Riemenscheibe und elastischem Werkstoff des Riemenkörpers durch die Polyethylenschicht vermieden wird. Reibungskoeffizienten von 0,4 oder weniger können auf diese Weise bewirkt werden.

Weitere Vorteile der Erfindung ergeben sich aus den weiteren Unteransprüchen.

Ausführungsbeispiele der Erfindung werden nachfolgend anhand der Zeichnungen näher erläutert.

Es zeigen:
- Figur 1: einen Längsschnitt durch einen erfindungsgemäßen Antriebsriemen,
- Figur 2: einen Querschnitt durch den Antriebsriemen gemäß Figur 1 entlang der Schnittlinie A-A und
- Figur 3: eine Ausschnittsvergrößerung des Bereiches X nach Figur 2.

Ein Antriebsriemen 1 zur Übertragung einer Antriebsbewegung weist als wesentliche Bestandteile einen die Form des Antriebsriemens 1 definierenden Riemenkörper 2, einen sich in eine Riemenlängsrichtung L des Riemenkörpers 2 erstreckenden Carboncord 3 als Zugbewehrung und eine auf einer verschleißanfälligen Arbeitsseite des Riemenkörpers 2 angeordnete Beschichtung 4 auf. Der als Zugbewehrung dienende Carboncord 3 ist vollständig von dem Riemenkörper 2 umgeben und dient dazu, die Festigkeit des Antriebsriemens 1 in Riemenlängsrichtung L zu erhöhen. Der Carboncord 3 wird durch eine Vielzahl von einzelnen Kohlenfasern 5 gebildet, die miteinander schraubelinienförmig verdrillt sind.

Der Antriebsriemen 1 ist nach der dargestellten Ausführungsform der Erfindung als ein Zahnriemen ausgebildet. Der Riemenkörper 2 weist hierzu in Riemenlängsrichtung L hintereinander angeordnete Riemenzähne 6 auf. Die Ausbildung des Antriebsriemens 1 als Zahnriemen ist hierbei lediglich exemplarisch gewählt. Der Antriebsriemen 1 kann als beliebiger Antriebsriemen 1, insbesondere auch als Keilriemen, Poly-V-Riemen, Flachriemen oder dergleichen ausgeführt werden.

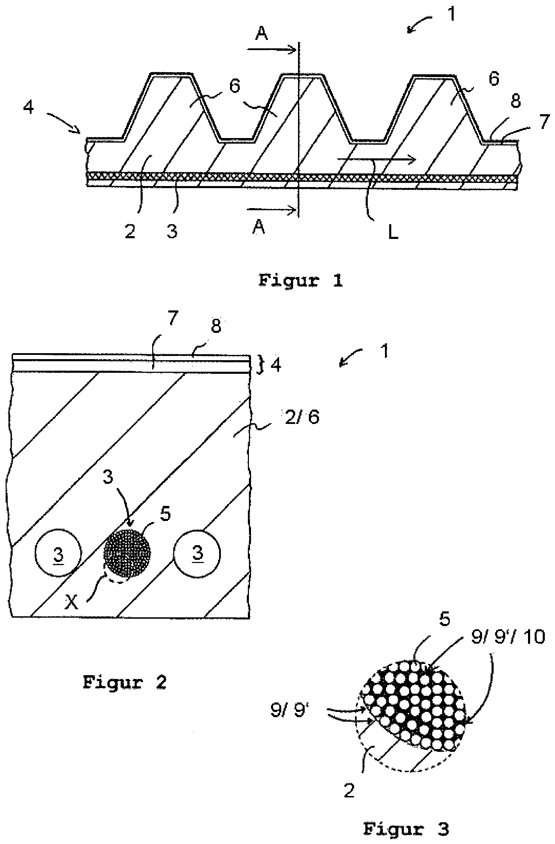

Wie sich insbesondere aus Figur 2 ergibt, ist eine Mehrzahl an Carboncords 3 quer zur Riemenlängsrichtung L beabstandet zueinander angeordnet. Durch die Mehrzahl an Carboncords 3 wird die Festigkeit des Riemenkörpers 2 in Riemenlängsrichtung L weiter erhöht. Ferner erhält der Antriebsriemen 1 quer zur Riemenlängsrichtung L näherungsweise gleiche physikalische Eigenschaften.

Der Riemenkörper 2 ist aus einem aushärtbaren elastischen Werkstoff, insbesondere aus Polyurethan gefertigt. Die Beschichtung 4 des Riemenkörpers 2 ist mehrschichtig ausgebildet. Eine an dem Riemenkörper 2 anliegende erste Schicht 7 ist als eine Gewebeschicht ausgebildet. Die Gewebeschicht 7 dient dazu, die mechanische Abriebfestigkeit des Antriebsriemens 1 zu erhöhen und den Verschleiß zu reduzieren. Als eine zweite Schicht 8 ist auf einer dem Riemenkörper 2 abgewandten Flachseite der Gewebeschicht 7 eine Polyethylenschicht ausgebildet. Die Polyethylenschicht 8 wird beispielsweise durch eine Folie (Polyethylenfolie) gebildet und dient in erster Linie dazu, die Reibung zwischen dem Antriebsriemen 1 und einer nicht dargestellten Riemenscheibe zu reduzieren. Die geschlossen ausgebildete Polyethylenschicht 8 verhindert, dass der elastische Werkstoff des Riemenkörpers 2 durch Freiräume der Gewebeschicht 7 hindurch dringt und in direktem Kontakt mit der Riemenscheibe gelangt. Beim direkten Kontakt des elastischen Werkstoffs des Riemenkörpers 2 mit der Riemenscheibe ergibt sich bei üblichen Riemenscheibenmaterialien ein unerwünscht hoher Reibungskoeffizient von beispielsweise 0,6 oder mehr. Die reibungsreduzierende Polyethylenschicht verhindert diesen direkten Kontakt des elastischen Werkstoffs mit der Riemenscheibe. Ein Reibungskoeffizient zwischen der Polyethylenschicht 8 und dem Riemenscheibenmaterial liegt typischerweise bei 0,4 oder weniger. Die Beschichtung 4 ist lediglich beispielhaft zweischichtig ausgebildet. Die Beschichtung 4 kann nach der Erfindung mehr als zwei Schichten aufweisen. Ebenso kann die Beschichtung 4 lediglich aus einer Schicht, beispielsweise aus der Gewebeschicht 7 oder aus der Polyethylenschicht 8, gebildet sein.

In Figur 2 sind aus Gründen der Übersichtlichkeit und der einfachen Darstellbarkeit lediglich für einen der drei Carboncords 3 die einzelnen Kohlenfasern 5 dargestellt. Alle Carboncords 3 des Antriebsriemens 1 sind aus einer Vielzahl von einzelnen, miteinander schraubenlinienförmig verdrillten Kohlenfasern 5 gebildet.

Wie sich deutlich aus der Detailvergrößerung nach Figur 3 ergibt, sind zwischen den einzelnen Kohlenfasern 5 des Carboncords 3 Zwischenräume 9 gebildet. Ein erster Teil 9' der Zwischenräume 9 ist mit einem Bruchverminderungsfüllstoff 10 befüllt. Ein zweiter Teil 9'' der Zwischenräume 9 ist mit dem elastischen Werkstoff, welcher den Riemenkörper 2 bildet, befüllt. Dabei ist die Mehrzahl der Zwischenräume 9 mit dem Bruchverminderungsfüllstoff 10 gefüllt. Der geringe zweite Teil 9'' der Zwischenräume 9 weist den elastischen Werkstoff des Riemenkörpers 2 auf. Im Mittel weist ein mm³ Cordvolumen des Carboncords weniger als 0,20 mg des elastischen Werkstoffs des Riemenkörpers 2, vorzugsweise 0,18 mg oder weniger des elastischen Werkstoffs des Riemenkörpers 2 auf.

Der elastische Werkstoff des Riemenkörpers 2 kann in beliebige, nicht mit dem Füllstoff 10 gefüllte Zwischenräume 9 des Carboncords 3 eindringen. Insbesondere ist die Erfindung nicht darauf beschränkt, dass der elastische Werkstoff lediglich in äußere Zwischenräume 9'' im Bereich einer Mantelfläche des Carboncords 3 eindringt. Der elastische Werkstoff kann ebenso in Zwischenräume 9'' eingebracht sein, die im Inneren des Carboncords 3 angeordnet sind.

Zur Herstellung des Carboncords 3 werden eine Mehrzahl an Kohlenfasern 5 zu einem Garn verdrillt. Die Kohlenfasern 5 werden zum Auf- bzw. Einbringen des Bruchverminderungsfüllstoffs 10 in das Tauchbad getaucht. Während des Tauchens haftet der Bruchverminderungsfüllstoff 10 an den Kohlenfasern 5 an bzw. füllt den ersten Teil 9' der Zwischenräume 9 aus. Die Verfahrensschritte des Verdrillens der Kohlenfasern 5 und des Tauchens der Kohlenfasern 5 können in einer beliebigen Reihenfolge ausgeführt werden. Ferner können je nach Anwendungserfordernissen zwei oder mehr Garne zu einem Garnbündel verdrillt werden. Das Verdrillen der zwei oder mehr Garne zu einem Garnbündel kann wiederum vor oder nach dem Tauchen der Kohlenfasern 5 in dem Tauchbad erfolgen.

In einem weiteren Verfahrensschritt wird zur Bildung des Riemenkörpers 2 der den Bruchverminderungsfüllstoff 10 aufweisende Carboncord 3 mit dem aushärtbaren elastischen Werkstoff ummantelt. Hierbei dringt ein Teil des elastischen Werkstoffs in den zweiten, nicht mit dem Bruchverminderungsfüllstoff 10 gefüllten Teil 9'' der Zwischenräume 9 ein. Nach dem Aushärten des elastischen Werkstoffs ist der Carboncord 3 lagefest in dem Riemenkörper 2 angeordnet. Der Riemenkörper 2 und Carboncord 3 sind hierbei zum einen über die Haftmitteleigenschaft des Bruchverminderungsfüllstoffs 10 bzw. einer nicht dargestellten, Haftmittelschaften aufweisende Beschichtung der Kohlenfasern 5 und zum anderen aufgrund der in dem zweiten Teil 9'' der Zwischenräume 9 vorhandenen elastischen Werkstoffs des Riemenkörpers 2 miteinander verbunden. Die Haftung zwischen Riemenkörper 2 und Carboncord 3 ist so hoch, dass es während des Betriebs nicht zu einem unzulässigen Lösen des Carboncords 3 vom Riemenkörper 2 kommt. Der Riemenkörper 2 und der Carboncord 3 sind insofern lage- und stoffschlüssig derart miteinander verbunden, dass auf den Antriebsriemen 1 wirkende Zugkräfte zumindest anteilig über den als Zugbewehrung dienenden Carboncord 3 geführt werden.

Als Bruchverminderungsfüllstoff 10 können beispielsweise ein Polyurethan-frei Füllstoff oder ein Füllstoff verwendet werden, der ein anderes als das für den Riemenkörper 2 verwendete Polyurethanmaterial aufweist.

## Patentansprüche

1. Antriebsriemen mit einem Riemenkörper aus einem elastischen Werkstoff und mit einer in einer Riemenlängsrichtung erstreckten und von dem Riemenkörper zumindest abschnittsweise umgebenden Zugbewehrung zur Verbesserung der Festigkeit des Riemenkörpers in Riemenlängsrichtung, wobei als Zugbewehrung ein Carboncord mit einer Vielzahl von miteinander verdrillten Kohlenfasern, mit einer Vielzahl von Zwischenräumen zwischen den Kohlenfasern und mit einen die Zwischenräume wenigstens teilweise ausfüllenden Bruchverminderungsfüllstoff vorgesehen ist, **dadurch gekennzeichnet, dass** in einem ersten Teil (9') der Zwischenräume (9) der Kohlenfasern (5) der von dem elastischen Werkstoff des Riemenkörpers (2) verschiedener Bruchverminderungsfüllstoff (10) und in einem zweiten Teil (9") der Zwischenräume (9) der Kohlenfasern (5) der elastische Werkstoff des Riemenkörpers (2) angeordnet ist, wobei der Carboncord (3) weniger als 0,2 mg, vorzugsweise 0,18 mg oder weniger, des elastischen Werkstoffs des Riemenkörpers (2) pro mm³ Cordvolumen aufweist.

2. Antriebsriemen nach Anspruch 1, **dadurch gekennzeichnet, dass** der Bruchverminderungsfüllstoff (10), welchen den ersten Teil (9') der Zwischenräume 9 ausfüllt, Epoxalharz und/oder Isocyanate aufweist.

3. Antriebsriemen nach Anspruch 1 oder 2, **dadurch gekennzeichnet, dass** der Carboncord (3) zu Garnen verdrillte Kohlenfasern (5) und/oder zu Garnbündeln verdrillte Garne aus Kohlenfasern (5) aufweist, wobei der Bruchverminderungsfüllstoff (10) die Zwischenräume (9) zwischen den zu Garnen und/oder zu Garnbündeln verdrillten Kohlenfasern (5) nahezu vollständig ausfüllt.

4. Antriebsriemen nach einem der Ansprüche 1 bis 3, **dadurch gekennzeichnet, dass** die Kohlenfasern eine dieselbe zumindest abschnittweise umgebende Beschichtung aufweisen.

5. Antriebsriemen nach einem der Ansprüche 1 bis 4, **dadurch gekennzeichnet, dass** auf einer verschleißanfälligen Arbeitsseite des Riemenkörpers (2) eine mit dem Riemenkörper (2) fest verbundene Beschichtung (4) angeordnet ist zur Verbesserung der Verschleißbeständigkeit und/oder zur Reduzierung der Reibung.

6. Antriebsriemen nach einem der Ansprüche 1 bis 5, **dadurch gekennzeichnet, dass** die Beschichtung (4) eine an dem Riemenkörper (2) anliegende verschleißreduzierende Gewebeschicht (7) und/oder eine reibungsreduzierende Schicht (8) aufweist, wobei die reibungsreduzierende Schicht (8) als eine auf einer dem Riemenkörper (2) abgewandten Flachseite der Gewebeschicht (7) angeordnete Folie ausgebildet ist und wobei die reibungsreduzierende Schicht (8) insbesondere als eine Polyethylenschicht (8) ausgebildet sein kann.

7. Antriebsriemen nach einem der Ansprüche 1 bis 6, **dadurch gekennzeichnet, dass** der Riemenkörper (2) als elastischen Werkstoff Polyurethan aufweist.

8. Antriebsriemen nach Anspruch 7, **dadurch gekennzeichnet, dass** der Bruchverminderungsfüllstoff (10) Polyurethan aufweist, wobei für den Bruchverminderungsfüllstoff (10) ein erstes Polyurethanmaterial und als elastischer Werkstoff des Riemenkörpers (2) ein von dem ersten Polyurethanmaterial verschiedenes zweites Polyurethanmaterial Verwendung findet.

9. Antriebsriemen nach einem der Ansprüche 1 bis 8, **dadurch gekennzeichnet, dass** der Riemenkörper (2) Riemenzähne (6) aufweist zur Bildung eines Zahnriemens.

## Claims

1. Drive belt having a body which is made of a flexible material and a tensile reinforcement which extends in a belt axial direction and is surrounded by said belt body in sections at least to improve the tensile strength of the body in belt longitudinal direction wherein the tensile reinforcement is a carbon cord consisting of a plurality of twisted carbon fibers with a plurality of cavities between said fibers which are filled with a rupture risk reducing filler in part at least, **characterized in that** a rupture risk reducing filler (10) different from the flexible material for the belt body (2) is filled into a first portion (9') of the cavities (9) of said carbon fibers (5) and the flexible material for the belt body (2) is introduced into a second portion (9") of said cavities (9) wherein a carbon cord (3) contains less than 0.2 mg, preferably 0,18 mg or less, flexible material for the belt body (2) per one millimeter³ cord volume.

2. Drive belt according to Claim 1, **characterized in that** the rupture risk reducing filler (10) filling said first portion (9') of the cavities (9) comprises epoxy resin and/or isocyanate.

3. Drive belt according to Claim 1 or 2, **characterized in that** the carbon cord (3) consists of carbon fibers (5) twisted into yarns and/or yarns of carbon fibers (5) which are twisted into yarn bundles wherein the rupture risk reducing filler (10) fills up the cavities (9) between said carbon fibers (5) twisted into yarns and/or yarn bundles almost completely.

4. Drive belt according to any of the preceding Claims 1 to 3, **characterized in that** the carbon fibers are provided with a coating that surrounds said fibers in sections at least.

5. Drive belt according to any of the preceding Claims 1 to 4 **characterized in that** on a working side susceptible to wear of the belt body (2) a coating (4) firmly bonded to said body (2) is arranged to improve wear resistance and/or to reduce friction.

6. Drive belt according to any of the preceding claims 1 to 5, **characterized in that** the coating (4) comprises a wear reducing fabric layer (7) adhering to the belt body (2) and/or a friction reducing layer (8) which latter is in the form of a sheet disposed on a flat side of the fabric layer (7) that is facing away from the belt body (2) and which friction reducing layer (8) is a polyethylene layer (8) in particular.

7. Drive belt according to any of the preceding claims 1 to 6, **characterized in that** the belt body (2) comprises polyurethane as flexible material.

8. Drive belt according to Claim 7, **characterized in that** the rupture risk reducing filler (10) comprises polyure-thane, namely a first polyurethane materiaal for said filler (10) and a second polyurethane different from the first polyurethane material for the flexible material for the belt body (2).

9. Drive belt according to any of the preceding Claims 1 to 8, **characterized in that** the belt body (2) has teeth (6) to provided a toothed belt.

## Revendications

1. Courroie de transmission avec un corps de courroie en matériau élastique et avec une armature de traction, qui, s'étendant dans une direction longitudinale de la courroie et étant entourée, au moins par sections, par le corps de courroie, est destinée à améliorer la solidité du corps de courroie dans la direction longitudinale du corps de courroie, sachant que, comme armature de traction, est prévue une corde de carbone avec un grand nombre de fibres torsadées ensemble, avec un grand nombre d'intervalles entre les fibres de carbone et avec un matériau de remplissage réduisant la rupture, qui remplit, au moins partiellement les intervalles, **caractérisée en ce que,** dans une première partie (9') des intervalles (9) des fibres de carbone (5), est disposé le matériau de remplissage réduisant la rupture (10), lequel diffère du matériau du corps de courroie (2), et que, dans une deuxième partie (9") des intervalles (9) des fibres de carbone (5), est disposé le matériau élastique du corps de courroie (2), sachant que la corde de carbone (3) présente moins de 0,2 mg, de préférence 0,18 mg ou moins du matériau élastique du corps de courroie (2) par mm² du volume de corde.

2. Courroie de transmission selon la revendication 1, **caractérisée en ce que** le matériau de remplissage réduisant la rupture (10), lequel remplit la première partie (9') des intervalles (9), présente de la résine époxy et / ou de l'isocyanate.

3. Courroie selon revendication 1 ou 2, **caractérisée en ce que** la corde de carbone (3) présente des fibres de carbone (5) torsadées en fils et / ou des fils en fibre de carbone (5) torsadés en faisceaux de fils, sachant que le matériau de remplissage réduisant la rupture (10) remplit presque complètement les intervalles (9) entre les fibres de carbone (5) torsadées en fils et / ou en faisceaux de fils.

4. Courroie selon l'une des revendications 1 à 3, **caractérisée en ce que** les fibres de carbone présentent un revêtement entourant celles-ci au moins partiellement.

5. Courroie selon l'une des revendications 1 à 4, **caractérisée en ce que,** sur une face de travail du corps de courroie (2) sujette à l'usure, un revêtement (4), lié fixement au corps de courroie (2), est disposé pour améliorer la résistance à l'usure et / ou pour réduire le frottement.

6. Courroie selon l'une des revendications 1 à 5, **caractérisée en ce que** le revêtement (4) présente une couche de tissu réduisant l'usure (7), adjacente au corps de courroie (2), et / ou une couche réduisant le frottement (8), sachant que la couche réduisant le frottement (8) est réalisée sous la forme d'un film disposé sur une face plane de la couche de tissu (7) opposée au corps de courroie (2), et sachant que la couche réduisant le frottement (8) présente particulièrement la forme d'une couche de polyéthylène (8).

7. Courroie selon l'une des revendications 1 à 6, **caractérisée en ce que** le corps de courroie (2) présente un matériau polyuréthane élastique.

8. Courroie selon la revendication 7, **caractérisée en ce que** le matériau de remplissage réduisant la rupture (10) comprend du polyuréthane, sachant que, pour le matériau de remplissage réduisant la rupture (10), on utilise un premier matériau polyuréthane et, comme matériau élastique du corps de courroie (2), un deuxième matériau polyuréthane qui diffère du premier matériau polyuréthane.

9. Courroie selon l'une des revendications 1 à 8, **caractérisée en ce que** le corps de courroie (2) présente des dents de courroie (6) pour la formation d'une courroie dentée.
